# EUROPÄISCHE PATENTSCHRIFT

(11) **EP 3 230 116 B1**
(45) Veröffentlichungstag und Bekanntmachung des Hinweises auf die Patenterteilung: **28.04.2021**
(21) Anmeldenummer: 15787902.4
(22) Anmeldetag: 03.11.2015
(51) Int. Cl.: B60L 53/12, B60L 53/36

(54) **VERFAHREN ZUM AUFLADEN EINES ENERGIESPEICHERS IN EINEM KRAFTFAHRZEUG MIT BEREITSCHAFTSSIGNALISIERUNG UND LADESYSTEM**
METHOD FOR CHARGING AN ENERGY STORE IN A MOTOR VEHICLE WITH READINESS SIGNALLING, AND CHARGING SYSTEM
PROCÉDÉ DE CHARGE D'UN ACCUMULATEUR D'ÉNERGIE DANS UN VÉHICULE AUTOMOBILE, INDIQUANT UN ÉTAT "PRÊT À CHARGER", ET SYSTÈME DE CHARGE

(30) Priorität: 13.12.2014 DE 102014018674
(43) Veröffentlichungstag der Anmeldung: 18.10.2017
(73) Patentinhaber: Daimler AG, 70372 Stuttgart (DE)
(72) Erfinder: BAUMER, Timo, 70192 Stuttgart (DE)
(74) Vertreter: JENSEN & SON
(86) Internationale Anmeldenummer: PCT/EP2015/002197
(87) Internationale Veröffentlichungsnummer: WO 2016/091343

(56) Entgegenhaltungen:
- WO-A1-2011/110924
- WO-A1-2014/054608
- WO-A1-2014/077042
- WO-A1-2014/157091
- WO-A1-2014/157092
- DE-A1-102013 016 880
- US-A1- 2010 235 006

## Beschreibung

Die Erfindung betrifft ein Verfahren zum Aufladen eines Energiespeichers in einem Kraftfahrzeug mittels induktiver Energieübertragung von einer auf einem befahrbaren Untergrund ortsfest verankerbaren Energieübertragungseinheit, welche Teil einer induktiven Ladestation ist, zu dem Kraftfahrzeug, wobei zwischen der induktiven Ladestation und dem Kraftfahrzeug zur Vorbereitung und/oder Durchführung des Aufladens des Energiespeichers ein Kommunikationskanal aufgebaut wird. Weiterhin betrifft die Erfindung ein Ladesystem mit einem Kraftfahrzeug, welches einen Energiespeicher aufweist, einer induktiven Ladestation zum Aufladen des Energiespeichers in dem Kraftfahrzeug mittels induktiver Energieübertragung, mit einer Energieübertragungseinheit, die auf einem befahrbaren Untergrund ortsfest verankerbar ist und Teil der induktiven Ladestation ist und mit einem Kommunikationskanal zwischen der induktiven Ladestation und dem Kraftfahrzeug zur Vorbereitung und/oder Durchführung des Aufladens des Energiespeichers.

Ein Elektrofahrzeug oder Hybridfahrzeug, dessen Batterie aus einer externen Energiequelle geladen werden soll, benötigt eine elektrische Kopplung zu einem speisenden Netz. Im einfachsten Fall handelt es sich dabei um eine Kabelverbindung, über welche die externe Energiequelle an das Kraftfahrzeug angeschlossen wird. Es sind insbesondere Anforderungen an Berühr- und Fremdkörperschutz (Verschmutzung) zu berücksichtigen. Als Alternative zu der leitungsgebundenen Energieübertragung steht die drahtlose Energieübertragung, auch als kontaktlose Energieübertragung bezeichnet, zur Verfügung. Dabei ist eine möglichst genaue Positionierung des Fahrzeugs in Bezug auf eine ortsfeste Ladestation erforderlich, um den bestmöglichen Wirkungsgrad für die Energieübertragung zu erzielen. Für eine hohe Flexibilität kann es hierbei vorteilhaft sein, wenn Ladestationen an öffentlichen Parkplätzen bereitgestellt werden.

In diesem Zusammenhang offenbart die JP 2012-135135 ein Fahrzeugladesystem, welches ein Kommunikationsteil außerhalb eines Fahrzeugs zur Übertragung einer Information, welche auf ein Ladegerät aufmerksam macht, an das geparkte Fahrzeug, ein Kommunikationsteil in dem Fahrzeug zum Empfang der Information sowie ein Anzeigeteil und ein Audio-Ausgabeteil in dem Fahrzeug, welches einen Fahrer basierend auf der Information über das Vorhandensein des Ladegeräts informiert, aufweist.

WO2014/157092 offenbart eine Ladestation für induktives Laden eines Fahrzeugs. Von dieser Ladestation werden zusätzlich zur kabellosen Kommunikation Lichtsignalen zur Information des Fahrer ausgesandt.

WO2014/054608 offenbart eine Ladestation für induktives Laden bei der durch Lichtsignale im Boden der Fahrer zur Ladeposition geleitet wird.

Es ist Aufgabe der vorliegenden Erfindung, ein Verfahren und ein Ladesystem bereitzustellen, welches eine besonders einfache Art und Weise der Kontaktaufnahme zwischen einem Ladegerät und einem Fahrer eines Kraftfahrzeugs ermöglicht.
Diese Aufgabe wird durch ein Verfahren mit den Merkmalen des Patentanspruchs 1 und durch ein Ladesystem mit den Merkmalen des Patentanspruchs 8 gelöst. Vorteilhafte Weiterbildungen der vorliegenden Erfindung sind Gegenstand der abhängigen Ansprüche.
Die Erfindung geht von einem Verfahren zum Aufladen eines Energiespeichers in einem Kraftfahrzeug mittels induktiver Energieübertragung von einer auf einem befahrbaren Untergrund ortsfest verankerbaren Energieübertragungseinheit, welche Teil einer induktiven Ladestation ist, zu dem Kraftfahrzeug aus, wobei zwischen der induktiven Ladestation und dem Kraftfahrzeug zur Vorbereitung und/oder Durchführen des Aufladens des Energiespeichers ein Kommunikationskanal aufgebaut wird. Das Verfahren wird gemäß der Erfindung derart weitergebildet, dass die induktive Ladestation zur Signalisierung der Bereitschaft zum Aufladen des Energiespeichers des Kraftfahrzeugs ein Lichtsignal zur Wahrnehmung durch einen Führer des Kraftfahrzeugs bereitstellt, welches nicht über den Kommunikationskanal übertragen wird.
Entsprechend wird ein Ladesystem mit einem Kraftfahrzeug, welches einen Energiespeicher aufweist, mit einer induktiven Ladestation zum Aufladen des Energiespeichers in dem Kraftfahrzeug mittels induktiver Energieübertragung, mit einer Energieübertragungseinheit, die auf einem befahrbaren Untergrund ortsfest verankerbar ist und Teil der induktiven Ladestation ist, sowie mit einem Kommunikationskanal zwischen der induktiven Ladestation und dem Kraftfahrzeug zur Vorbereitung und/oder Durchführung des Aufladens des Energiespeichers derart weitergebildet, dass die induktive Ladestation dazu ausgelegt ist, zur Signalisierung der Bereitschaft zum Aufladen des Energiespeichers des Kraftfahrzeugs ein Lichtsignal zur Wahrnehmung durch einen Führer des Kraftfahrzeugs bereitzustellen, welches nicht über den Kommunikationskanal übertragen wird.

Hierdurch ergibt sich eine besonders einfache Identifizierungsmöglichkeit der Ladestation, und gleichzeitig bietet das Lichtsignal eine optische Leitfunktion zu der Ladestation. Weiterhin kann die Ladestation die Bereitschaft zum Aufladen signalisieren, wodurch beispielsweise auch eine defekte Ladestation identifiziert werden kann. Auch bei Nichtverfügbarkeit der Energieversorgung aus dem speisenden Netz (Stromausfall) kann somit der Führer des Kraftfahrzeugs beziehungsweise Kraftfahrzeugführer aufgrund des fehlenden Bereitschaftssignals von einer Ansteuerung der Ladestation mit seinem Fahrzeug absehen. Besonders vorteilhaft kann das Bereitschaftssignal auch dazu benutzt werden, eine Kompatibilität der Ladestation mit dem Kraftfahrzeug anzuzeigen.

Bevorzugt kann die Bereitstellung des Lichtsignals zeitlich vor dem Erreichen einer finalen Ladeposition des Kraftfahrzeugs über der Energieübertragungseinheit erfolgen. Insbesondere kann die Bereitstellung des Lichtsignals schon zeitlich vor dem Einleiten des Positioniervorgangs beginnen. Hierdurch kann dem Führer des Kraftfahrzeugs schon aus größerer Entfernung signalisiert werden, ob ein Ladevorgang überhaupt möglich ist.

In einer bevorzugten Ausführungsform wird das Lichtsignal von der Energieübertragungseinheit ausgesendet. Hierdurch wird die Aufmerksamkeit des Kraftfahrzeugführers direkt auf die Energieübertragungseinheit, über welcher das Kraftfahrzeug positioniert werden muss, gelenkt. Es kann jedoch auch vorgesehen sein, den Stellplatz, welcher zum Abstellen des Kraftfahrzeugs während des Aufladens des Energiespeichers vorgesehen ist, insgesamt oder durch einen Rahmen gekennzeichnet zu illuminieren. Beispielsweise kann es auch vorgesehen sein, dass in Abhängigkeit der Fahrzeugabmessungen nur ein bestimmter Bereich des Abstellplatzes durch das Lichtsignal hervorgehoben wird.

In einer bevorzugten Ausführungsform kann die Bereitstellung des Lichtsignals nach dem Aufbau des Kommunikationskanals erfolgen, insbesondere kann die Bereitstellung des Lichtsignals unmittelbar danach erfolgen. Dadurch ergibt sich der Vorteil, dass der Kraftfahrzeugführer unmittelbar nach dem Aufbau der Verbindung zwischen der Ladestation und dem Kraftfahrzeug über den Kommunikationskanal über das Vorhandensein und den Standort der Ladestation, insbesondere der Energieübertragungseinheit, informiert wird.

Bevorzugt kann der Kommunikationskanal durch eine Funkverbindung, beispielsweise WLAN, Bluetooth und dergleichen, realisiert sein. Hierdurch können bereits vorhandene Infrastrukturen genutzt werden.

In einer bevorzugten Ausführungsform wird das Lichtsignal mit einem pulsierenden und/oder zumindest abschnittsweise konstanten Zeitverlauf bereitgestellt. Hierdurch wird besonders effektiv die Aufmerksamkeit des Kraftfahrzeugführers auf das Lichtsignal gelenkt.

Bevorzugt können mittels des Lichtsignals Ziffern, Zeichen und/oder grafische Symbole in wahlfreier Zusammenstellung sichtbar gemacht und/oder hervorgehoben werden. Hierdurch können weitere Informationen an den Kraftfahrzeugführer bereitgestellt werden.

Die für das erfindungsgemäße Verfahren beschriebenen Vorteile und Merkmale sowie Ausführungsformen gelten gleichermaßen für das erfindungsgemäße Ladesystem und umgekehrt. Folglich können für Verfahrensmerkmale entsprechende Vorrichtungsmerkmale und umgekehrt vorgesehen sein.

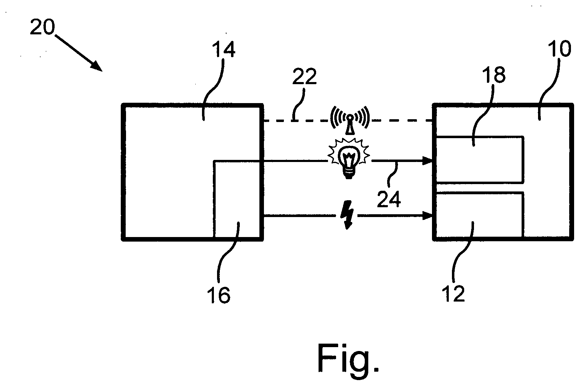

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Fig. eine schematische Darstellung eines erfindungsgemäßen Ladesystems.

Die Erfindung geht aus von einem Kraftfahrzeug 10 mit einem Energiespeicher 12, bevorzugt einem elektrischen Energiespeicher, welcher beispielsweise aus Lithium-Ionen-Zellen aufgebaut ist. Zum Aufladen des Energiespeichers 12 wird eine induktive Ladestation 14 benutzt, welche eine Energieübertragungseinheit 16 aufweist, welche beispielsweise auf dem Boden eines mit einer induktiven Ladestation 14 ausgestatteten Stellplatzes angeordnet ist. Beim Aufladen des Energiespeichers 12 findet eine Energieübertragung zwischen der Energieübertragungseinheit 16 und dem Energiespeicher 12 statt, welche in der einzigen Fig. durch einen Pfeil dargestellt ist. Als Gegenstück zu der Energieübertragungseinheit 16 dient hierbei eine in der einzigen Fig. nicht dargestellte zu dem Kraftfahrzeug 10 gehörende Energieempfangseinheit.

Ein Kraftfahrzeugführer 18 beziehungsweise ein Bereich des Kraftfahrzeugs 10, von welchem aus üblicherweise ein Blickkontakt mit einer Umgebung außerhalb des Kraftfahrzeugs 10 hergestellt werden kann, ist ebenfalls dargestellt. Der Kraftfahrzeugführer 18 steht somit nur repräsentativ für einen Bereich des Kraftfahrzeugs 10.

Zur Vorbereitung und/oder Durchführung eines Aufladevorgangs des Energiespeichers 12 wird nun ein Kommunikationskanal 22 zwischen der induktiven Ladestation 14 und dem Kraftfahrzeug 10 aufgebaut. Dieser Kommunikationskanal 22 kann bevorzugt auf einer Funkverbindung, insbesondere WLAN, Bluetooth oder dergleichen basieren. Nach dem Aufbau des Kommunikationskanals 22 wird von der induktiven Ladestation 14 ein Lichtsignal 24 bereitgestellt, das zur Signalisierung der Bereitschaft zum Aufladen des Energiespeichers 12 des Kraftfahrzeugs 10 dient.

Bevorzugt kann das Lichtsignal 24 über die Energieübertragungseinheit 16 bereitgestellt werden, welche beispielsweise als Ladeplatte auf dem befahrbaren Untergrund angeordnet ist. Alternativ oder zusätzlich kann das Lichtsignal 24 von der induktiven Ladestation 14 insgesamt bereitgestellt werden. So können beispielsweise weitere Elemente der induktiven Ladestation 14, wie beispielsweise eine an einer Wand oder einer Säule angebrachte Komponenten der induktiven Ladestation 14, das Lichtsignal 24 bereitstellen. Es kann sich dabei auch um Begrenzungselemente eines Stellplatzes für ein Kraftfahrzeug 10 zum Aufladen des Energiespeichers 12 handeln.

Für einen beispielhaften Ladevorgang des induktiven, das heißt kabellosen Ladens ist das Fahrzeug über der Ladeplatte zu positionieren. Bevor jedoch die Positionierung startet, soll bevorzugt die Ladeplatte mit einem Lichtsignal das Fahrzeug beziehungsweise den Fahrer "Willkommen heißen" und damit bestätigen, dass diese bereit ist für den Ladevorgang.

Ein Aufleuchten der Ladeplatte kann mit dem Aufbau der Funkverbindung zwischen Fahrzeug und Ladeplatte gekoppelt sein. Das heißt, sobald die Funkverbindung zwischen Fahrzeug und Ladeplatte automatisch, das heißt ohne Zutun des Kraftfahrzeugführers 18, aufgebaut ist, kann die Ladeplatte zu leuchten anfangen. Eine derartige Funktion kann "Welcome Home" heißen.

Das Ausführungsbeispiel dient lediglich der Erläuterung der Erfindung und ist für diese nicht beschränkend. So können natürlich Funktionen, insbesondere die Form des Kommunikationskanals 22 oder die Form des Lichtsignals 24 beliebig gestaltet sein, ohne den Gedanken der Erfindung zu verlassen.

Insgesamt wurde somit gezeigt, wie eine Begrüßungsbeleuchtung "Welcome Home" von Ladestationen mit Induktionsladen realisiert sein kann.

### Bezugszeichenliste

- 10: Kraftfahrzeug
- 12: Energiespeicher
- 14: Induktive Ladestation
- 16: Energieübertragungseinheit
- 18: Kraftfahrzeugführer
- 20: Ladesystem
- 22: Kommunikationskanal
- 24: Lichtsignal

## Patentansprüche

1. Verfahren zum Aufladen eines Energiespeichers (12) in einem Kraftfahrzeug (10) mittels induktiver Energieübertragung von einer auf einem befahrbaren Untergrund ortsfest verankerbaren Energieübertragungseinheit (16), welche Teil einer induktiven Ladestation (14) ist, zu dem Kraftfahrzeug (10), wobei zwischen der induktiven Ladestation (14) und dem Kraftfahrzeug (10) zur Vorbereitung und/oder Durchführung des Aufladens des Energiespeichers (12) ein Kommunikationskanal (22) aufgebaut wird,
wobei die induktive Ladestation (14) zur Signalisierung der Bereitschaft zum Aufladen des Energiespeichers (12) des Kraftfahrzeugs (10) ein Lichtsignal (24) zur Wahrnehmung durch einen Führer (18) des Kraftfahrzeugs (10) bereitstellt, welches nicht über den Kommunikationskanal (22) übertragen wird.
**dadurch gekennzeichnet, dass**
das Lichtsignal (24) mindestens zum Teil von der Energieübertragungseinheit (16) ausgesendet wird.

2. Verfahren nach Anspruch 1,
**dadurch gekennzeichnet, dass**
die Bereitstellung des Lichtsignals (24) zeitlich vor dem Erreichen einer finalen Ladeposition des Kraftfahrzeugs (10) über der Energieübertragungseinheit (16) erfolgt.

3. Verfahren nach Anspruch 1 oder 2,
**dadurch gekennzeichnet, dass**
die Bereitstellung des Lichtsignals (24) nach dem Aufbau des Kommunikationskanals (22) erfolgt.

4. Verfahren nach einem der vorhergehenden Ansprüche,
**dadurch gekennzeichnet, dass**
der Kommunikationskanal (22) durch eine Funkverbindung realisiert wird.

5. Verfahren nach einem der vorhergehenden Ansprüche,
**dadurch gekennzeichnet, dass**
das Lichtsignal (24) mit einem pulsierenden und/oder zumindest abschnittsweise konstanten Zeitverlauf bereitgestellt wird.

6. Verfahren nach einem der vorhergehenden Ansprüche,
**dadurch gekennzeichnet, dass**
mittels des Lichtsignals (24) Ziffern, Zeichen und/oder graphische Symbole in wahlfreier Zusammenstellung sichtbar gemacht und/oder hervorgehoben werden.

7. Ladesystem (20) mit:
- einem Kraftfahrzeug (10), welches einen Energiespeicher (12) aufweist,
- einer induktiven Ladestation (14) zum Aufladen des Energiespeichers (12) in dem Kraftfahrzeug (10) mittels induktiver Energieübertragung,
- einer Energieübertragungseinheit (16), die auf einem befahrbaren Untergrund ortsfest verankerbar ist und Teil der induktiven Ladestation (14) ist, und
- einem Kommunikationskanal (22) zwischen der induktiven Ladestation (14) und dem Kraftfahrzeug (10) zur Vorbereitung und/oder Durchführung des Aufladens des Energiespeichers (12),
wobei die induktive Ladestation (14) dazu ausgelegt ist, zur Signalisierung der Bereitschaft zum Aufladen des Energiespeichers (12) des Kraftfahrzeugs (10) ein Lichtsignal (24) zur Wahrnehmung durch einen Führer (18) des Kraftfahrzeugs (10) bereitzustellen, welches nicht über den Kommunikationskanal (22) übertragen wird,
**dadurch gekennzeichnet, dass**
das Lichtsignal (24) mindestens zum Teil von der Energieübertragungseinheit (16) aussendbar ist.

## Claims

1. Method for charging an energy store (12) in a motor vehicle (10) by means of inductive energy transmission from an energy transmission unit (16), which can be anchored in a stationary manner to a ground accessible to vehicles and which is a part of an inductive charging station (14), to the motor vehicle (10), wherein a communication channel (22) is built up between the inductive charging station (14) and the motor vehicle (10) to prepare and/or perform the charging of the energy store (12),
wherein the inductive charging station (14) provides a light signal (24) not transmitted via the communication channel (22) for perception by a driver (18) of the motor vehicle (10) to signal the readiness for charging the energy store (12) of the motor vehicle (10),
**characterised in that**
the light signal (24) is at least partially sent out by the energy transmission unit (16).

2. Method according to claim 1,
**characterised in that**
the light signal (24) is provided chronologically before a final charging position of the motor vehicle (10) is reached over the energy transmission unit (16).

3. Method according to claim 1 or 2,
**characterised in that**
the light signal (24) is provided after the build-up of the communication channel (22).

4. Method according to any of the preceding claims,
**characterised in that**
the communication channel (22) is realised by a radio link.

5. Method according to any of the preceding claims,
**characterised in that**
the light signal (24) is provided with a pulsing and/or at least partially constant passage of time.

6. Method according to any of the preceding claims,
**characterised in that**
by means of the light signal (24), numbers, characters and/or graphic symbols are made visible and/or highlighted in random combination.

7. Charging system (20) with:
- a motor vehicle (10) having an energy store (12),
- an inductive charging station (14) for charging the energy store (12) in the motor vehicle (10) by means of inductive energy transmission,
- an energy transmission unit (16), which can be anchored in a stationary manner to a ground accessible to vehicles, and
- a communication channel (22) between the inductive charging station (14) and the motor vehicle (10) to prepare and/or perform the charging of the energy store (12),
wherein the inductive charging station (14) is designed to provide a light signal (24) not transmitted via the communication channel (22) for perception by a driver (18) of the motor vehicle (10) to signal the readiness for charging the energy store (12) of the motor vehicle (10),
**characterised in that**
the light signal (24) can at least partially be sent out by the energy transmission unit (16).

## Revendications

1. Procédé de recharge d'un accumulateur d'énergie (12) dans un véhicule à moteur (10) par transfert d'énergie par induction depuis une unité de transfert d'énergie (16) pouvant être ancrée à demeure dans un sol carrossable, qui fait partie d'une station de recharge par induction, jusqu'au véhicule à moteur (10), entre la station de recharge par induction (14) et le véhicule à moteur (10) est établi un canal de communication (22) pour préparer et/ou procéder à la recharge de l'accumulateur d'énergie (12),
la station de recharge par induction (14) fournissant un signal lumineux (24) signalant la disponibilité de la recharge de l'accumulateur d'énergie (12) du véhicule à moteur (10) pour qu'il soit perçu par un conducteur (18) du véhicule à moteur (10), ledit signal n'étant pas transféré par le canal de communication (22), **caractérisé en ce que** le signal lumineux (24) est envoyé au moins partiellement par l'unité de transfert d'énergie (16).

2. Procédé selon la revendication 1, **caractérisé en ce que** l'unité de transfert d'énergie (16) fournit le signal lumineux (24) avant que le véhicule à moteur (10) n'atteigne une position de recharge finale.

3. Procédé selon la revendication 1 ou la revendication 2, **caractérisé en ce que** la fourniture du signal lumineux (24) est effectuée après l'établissement du canal de communication (22).

4. Procédé selon l'une des revendications précédentes, **caractérisé en ce que** le canal de communication (22) est réalisé par une liaison radio.

5. Procédé selon l'une des revendications précédentes, **caractérisé en ce que** le signal lumineux (24) est fourni par variation pulsée et/ou au moins partiellement constante.

6. Procédé selon l'une des revendications précédentes, **caractérisé en ce que** le signal lumineux (24) permet de rendre visibles et/ou de mettre en évidence des chiffres, des caractères et/ou des symboles graphiques en les combinant.

7. Système de recharge (20) comprenant :
- un véhicule à moteur (10) qui présente un accumulateur d'énergie (12),
- une station de recharge par induction (14) pour recharger accumulateur d'énergie (12) dans le véhicule à moteur (10) au moyen d'un transfert d'énergie par induction,
- une unité de transfert d'énergie (16) qui peut être ancrée à demeure dans le sol carrossable et qui fait partie d'une station de recharge par induction (14), et
- un canal de communication (22) entre la station de recharge par induction (14) et le véhicule à moteur (10) pour préparer et/ou procéder à la recharge de l'accumulateur d'énergie (12),
- la station de recharge par induction (14) produisant un signal lumineux (24) signalant la disponibilité de la recharge de l'accumulateur d'énergie (12) du véhicule à moteur (10) pour qu'il soit perçu par un conducteur (18) du véhicule à moteur (10), ledit signal n'étant pas transféré par le canal de communication, **caractérisé en ce que** le signal lumineux (24) est envoyé au moins partiellement par l'unité de transfert d'énergie (16).
